# EUROPEAN PATENT APPLICATION

(11) **EP 3 758 421 A1**
(43) Date of publication of application: **30.12.2020**
(21) Application number: 19182702.1
(22) Date of filing: 26.06.2019
(51) Int. Cl.: H04W 48/18, H04W 88/06

(54) **A METHOD IN A TERMINAL, TERMINAL, BASE STATION, AND WIRELESS COMMUNICATION SYSTEM**

(71) Applicant: FUJITSU LIMITED, Kawasaki-shi, Kanagawa 211-8588 (JP)
(72) Inventor: BUCKNELL, Paul, Peacehaven East Sussex BN10 7AJ (GB); MOULSLEY, Timothy, Surrey, CR3 5EE (GB)
(74) Representative: Haseltine Lake Kempner LLP

(57) **Abstract**

A procedure for inter-RAT cell selection by allowing a terminal such as an IoT device, under longer term network control, to access a cell on another RAT. A multi-RAT cellular communication system comprises a first base station (20) providing a first cell (30) using a first RAT (RAT1), and a second base station (40) providing a second cell (50) using a second RAT (RAT2). A terminal (10) camped on the first cell (30) may perform a cell selection/reselection procedure to connect to the second cell (50). This is achieved by the first base station (20) transmitting a trigger condition control message including at least one parameter for deciding whether to trigger the cell selection/reselection procedure. Each such parameter is stored in an internal memory of the terminal (10). At some later time the terminal (10) decides whether to trigger the cell selection/reselection procedure by executing trigger condition checking algorithms, which combine the at least one parameter from the trigger condition control message with at least one property of the terminal not known in the network, such as the current battery level of the terminal. The second base station (40) completes the cell selection/reselection procedure with the terminal (10) and grants a connection to the second cell (50). This reduces the amount of signalling (and therefore terminal power) required for inter-RAT cell selection and re-selection.

## Description

### Field of the Invention

The present invention relates to a method in a terminal, to the terminal itself, to a base station and to a wireless communication system including the terminal and base station.

Particularly, but not exclusively, the present invention relates to techniques by which a terminal operating in one Radio Access Technology (RAT) may be caused to select a different-RAT serving cell.

### Background of the Invention

Wireless communication systems are widely known in which terminals (also called user equipments or UEs, subscriber or mobile stations) communicate with base stations (BSs) within range of the terminals.

The geographical areas served by one or more base stations are generally referred to as cells, and typically many BSs are provided in appropriate locations so as to form a system (or network, the two terms being used equivalently in this specification unless indicated otherwise) covering a wide geographical area more or less seamlessly with adjacent and/or overlapping cells. In general a given cell is also associated with a particular carrier frequency and a particular RAT, and a single system using a given RAT may comprise cells with different carrier frequencies. Each BS may support one or more cells (including cells formed by Remote Radio Heads (RRHs) which are linked to the BS via a fixed link such as a fibre optic cable). In each cell, the BS divides the available bandwidth for the cell, i.e. frequency and time resources, into individual resource allocations for the user equipments which it serves. The terminals are generally mobile and therefore may move among the cells, prompting a need for handovers between the base stations of adjacent cells. A terminal may be in range of (i.e. able to detect signals from and/or communicate with) several cells at the same time, but in the simplest case it communicates with one "serving" cell.

A Radio Access Technology, RAT, is an underlying physical connection method for a radio-based (wireless) communication system. One Radio Access Technology, RAT, or type of wireless system, is based upon the set of standards referred to as Long-Term Evolution, LTE or LTE-A (Advanced) for later versions. In the system topology in LTE (which is used here in general for LTE and LTE-A), each terminal, called a UE in LTE, connects wirelessly over an air interface (Uu) to a base station in the form of an enhanced node-B or eNB.

It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless system called the E-UTRAN (and henceforth generally referred to simply as "the system"). An LTE system can operate in a Time Division Duplex, TDD, mode in which the uplink and downlink are separated in time but use the same carrier frequency, or Frequency Division Duplex, FDD, in which the uplink and downlink occur simultaneously at different carrier frequencies. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB in turn is connected by a (usually) wired link (S1) to higher-level or "core network" entities, including a Serving Gateway (S-GW) allowing, among other things, communication with other networks including other RATs, and a Mobility Management Entity (MME) for managing the system and sending control signalling to other nodes, particularly eNBs, in the system. In addition a Packet Data Network (PDN) Gateway (P-GW) is present, separately or combined with the S-GW, to exchange data packets with any packet data network including the Internet. Thus, communication is possible between the LTE system and other systems. Meanwhile, the eNBs can communicate among themselves via a wired or wireless X2 interface.

Nowadays mobile access to the Internet or other communications networks is becoming a crucial necessity for both business and personal life and there are significant challenges to the current wireless systems due to the popularity of new applications such as social networking, cloud based services and big data analysis. With the forthcoming services such as Internet of things and ultra-reliable, mission-critical connections, a next-generation radio access system to succeed LTE/LTE-A and known as "5G" or "NR" (New Radio) is needed to satisfy all those demanding requirements. Work regarding 5G/NR is proceeding within various groups within 3GPP, the 3rd Generation Partnership Project previously responsible for devising the UMTS and LTE standards.

Incidentally, the above discussion by default refers to UEs operated by human users, for example in the form of mobile phones, laptop computers and PDAs or tablets. However, a wireless communication system may also be used for so-called Machine Type Communication (MTC) used in the Internet of Things (IoT), where MTC is a form of data communication which involves one or more entities that do not necessarily need human interaction. Entities involved in the IoT, henceforth referred to as IoT devices (or terminals), are also to be considered as a kind of UE except where the context demands otherwise. Applications of IoT devices include fleet management, smart metering, product tracking, home automation, e-health, etc. MTC or IoT devices are often in fixed locations, in contrast to the mobile devices of human users.

Narrowband IoT (NB-IoT) is a more recent 3GPP standard that addresses further requirements of the Internet of Things (IoT). The technology provides improved indoor coverage, support for large numbers of low-throughput devices, low delay sensitivity, ultra-low device cost, low device power consumption and optimized network architecture. The technology can be deployed "in-band", utilizing resource blocks within a normal LTE carrier, or in the unused resource blocks within a LTE carrier's guard-band, or "standalone" for deployments in dedicated spectrum.

As part of the physical layer design, the traditional concept of a base station which both schedules resources and houses the physical antennas for wireless communication with terminals (whether for human use or as part of the IoT), becomes more fluid. Terminology used with respect to 5G/NR includes "gNB" (Next generation Node B), which manages (either locally or remotely) at least one transmission point. Such a transmission point may also serve as a reception point, and is typically referred to as a TRP or TRxP (Transmission/Reception Point).

In the 4G core network (CN), called the Evolved Packet Core (EPC), protocol and reference points (interfaces) are defined for each entity such as the Mobility Management Entity (MME), Serving Gateway (S-GW), and Packet Data Network Gateway (P-GW) as described above.

On the other hand, in the 5G core, protocol and reference points (interfaces) are defined for each Network Function (NF). An NF may be implemented either as a network element on a dedicated hardware, as a software instance running on a dedicated hardware, or as a virtualised function (not limited to specific hardware) instantiated on an appropriate platform, e.g., a cloud infrastructure.

In both NR and LTE/LTE-A, on the downlink, at the physical layer level (Layer 1 of the LTE and NR protocol layers), each cell conventionally broadcasts a number of channels and signals to all UEs within range, whether or not the UE is currently being served by that cell. These may be used for cell search and selection, in what is known as a cell selection/reselection procedure. Here, the term "selection" refers to initial access before the UE has camped on a cell, whilst "reselection" refers to a change of cell to a "better" cell by a UE which is already camped on a cell. Below, the term "selection" applies to both selection and reselection unless the context demands otherwise.

The cell selection/reselection procedure involves a cell search undertaken by a User Equipment (UE) using a radio receiver to search for synchronisation signals from other cells in both time and frequency and thus detect the cell Identity (ID) of that cell. After synchronising to the detected cell, the UE is able to read the broadcast System Information (SI) from that cell, which is provided in the form of a set of numbered SI blocks (SIBs). This SI enables other procedures to be undertaken such as transmitting a request to access the cell, for example using the RANDOM ACCESS Channel (RACH) procedure. Typically a UE will search for the best cell by measuring signal strength for many different candidate cells and then prioritising the cells by pre-defined criteria which have been previously configured by the system. Such measurements may be categorised as "inter-frequency" measurements aimed at measuring other cells in the PLMN to which network the UE is already connected; or inter-RAT (also known as IRAT) measurements on cells of other PLMNs using different radio access technologies.

Once a UE has read SI and determined which cell, from the list of detected cells, it will eventually use for making the initial (RACH) access, the UE is said to be camping on that cell and will continue to read SI from only that cell. This cell is also referred to as the selected cell.

The base station typically transmits two types of signals to help the UE acquire cell synchronisation. These are the Primary Synchronisation Signal (PSS) and Secondary Synchronisation Signal (SSS). In LTE the PSS and SSS are transmitted in the centre 72 subcarriers in the first and sixth sub frame of each radio frame. In LTE there are three different PSS sequences and each cell transmits only one of them. Once the UE detects the correct PSS sequence it knows the slot timing and cell identity within a cell group (Three cell IDs). Then the UE correlates the same channel with 168 possible SSS sequences, thus when SSS is acquired the UE knows frame boundary and whether the cell uses a normal or extended cyclic prefix. The combination of the group (from PSS) and cell ID group number (0-167) from the SSS give the UE the Physical cell Identity (PCI). There are 168^{∗}3 or 504 unique PCIs. The PCI allows the UE to know the location of cell specific reference signals in the downlink subframes. These reference signals are used for channel estimation.

Once the UE has acquired time and frequency synchronisation for the broadcast downlink control channels it can start to read SI starting with the Master Information Block (MIB). The MIB contains DL channel bandwidth, system frame number and Physical channel hybrid ARQ (HARQ) configuration information. With this information the UE can then decode SIB1 and after this all the other SIBs being broadcast by the cell of the base station.

A UE can be in RRC-Idle-state (or Idle Mode) in which it is not known to the eNB, or in RRC Connected State in which it is connected to a cell for a call or data transfer, or camped on to a cell (it has completed the cell selection/reselection process and has chosen a cell). The UE monitors system information and (in most cases) paging information. Idle mode (and a corresponding camped-on/connected mode) is available in different RATs (Radio Access Technologies) which are types of technology used for radio access, for instance E-UTRA, UTRA, GSM, CDMA2000 1xEV-DO (HRPD) or CDMA2000 1x (1xRTT) or LTE or NB-loT or NR or WiMAX or Wi-Fi or WLAN. Invention embodiments may be used with all these RATs. Different RATs cooperating together may be seen as providing a Heterogeneous wireless network (HWN), and the different RATs may be provided by different operators. Typically each operator provides a respective Public Land Mobile Network (PLMN) using one RAT or more than one RAT. Thus, connection to a certain PLMN by a UE implies use by the UE of the RAT(s) associated with that PLMN, and vice-versa. For a UE operating in Idle Mode in such cellular systems, there are defined procedures for cell connection that typically have to be performed. LTE is used as an example below.

### Cell selection/reselection in idle mode - LTE

When camped on a cell, the UE shall regularly search for a better cell according to the cell reselection criteria. If a better cell is found, that cell is selected. The change of cell may imply a change of RAT, implying inter-RAT cell search.

Details on performance requirements for cell reselection can be found in 3GPP TS 36.133: "Requirements for Support of Radio Resource Management" (Release 15) which is hereby incorporated by reference.

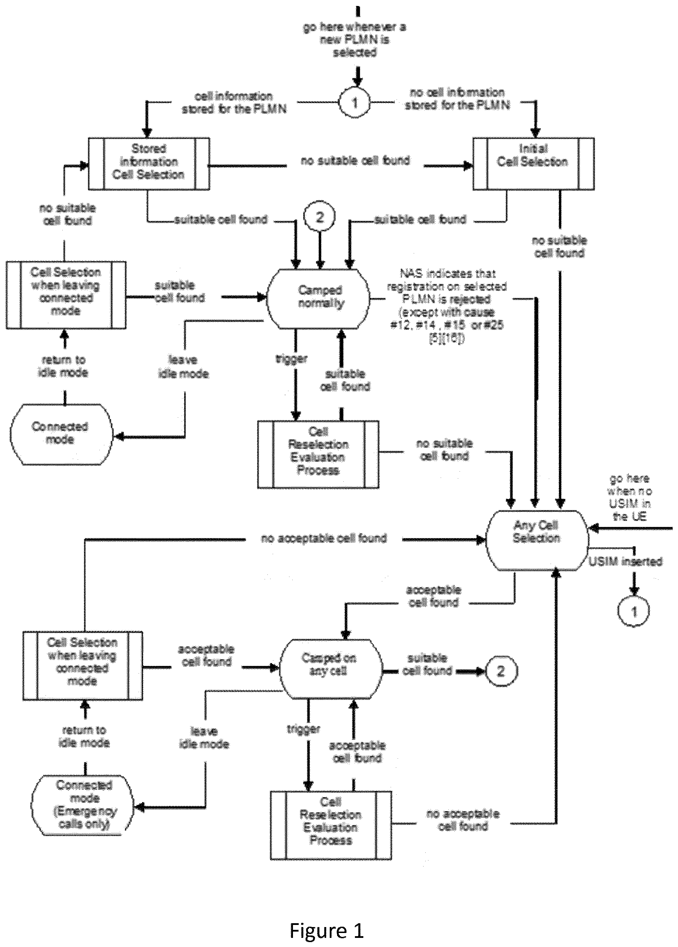

Cell selection and reselection procedures in LTE RRC-Idle-mode are defined in 3GPP TS 36.304 V15.1.0 (2018-09) "User Equipment (UE) procedures in idle mode" (Release 15) which also is hereby incorporated by reference; and the flow chart that represents these procedures for other than NB-IoT is reproduced in Figure 1 for clarity.

Figure 1 shows the typical cell selection/reselection flow for IDLE mode. All the states and state transitions and procedures in RRC_IDLE are shown. Whenever a new Public Land Mobile Network PLMN selection is performed, it causes an exit to number 1 shown at the top of the figure. Initially the UE is in idle mode. It then starts the cell selection process and camps on to a suitable cell. The UE then monitors system information and (in most cases) paging information. The cell reselection process takes place while the UE is camped on the cell. It is triggered by UE internal triggers to meet performance (or when information on the Broadcast Control CHannel (BCCH) or Bandwidth Reduced Broadcast Control CHannel BR-BCCH used for the cell reselection evaluation procedure has been modified). If a new (better) suitable cell is found, the UE camps on to that cell. If not (or if there was no suitable cell available in the first place or a suitable cell is no longer available), the UE carries out AnyCellSelection to find an acceptable cell. If one is found the UE camps on to the cell and starts reselection. If no acceptable cell is found AnyCellSelection is re-started. Further description is available in 3GPP TS 36.304.

Current procedure for triggering of Inter-frequency and Inter-RAT cell search and measurements is as follows and based primarily on preset Absolute Priority which may range, for example from 0 to 7 (highest priority) and varies by RAT:
- The UE shall continuously search for inter-frequency and Inter-RAT cells of higher Absolute Priority (than the serving cell) at least every 60 x N Seconds where N = total number of E-UTRA, UTRA FDD, UTRA TDD, CDMA2000 1x and HRPD carrier frequencies that have a higher absolute priority (increased by one if one or more groups of GSM frequencies is configured as a higher priority)
- The UE shall search for inter-frequency cells of higher, equal and lower Absolute Priority, and search for IRAT cells of higher and lower Absolute priority when: serving cell Srxlev <= sNonlntraSearchP
- Where Srxlev is the Cell selection RX level value (dB) and sNonlntrasearchP specifies the Srxlev threshold (in dB) for E-UTRAN inter-frequency and inter-RAT measurements. It is thus a threshold for measurements of inter-frequency of equal or lower priority than serving cell, and threshold for measurements of inter-RAT frequencies of lower priority than the serving cell
- Black lists can be used to prevent the UE from selecting or reselecting specific intra and inter-frequency cells

A further parameter employed in cell selection/reselection is the cell selection quality value Squal. A cell selection criterion used in LTE in normal coverage (i.e., not loT) is Srxlev >0 and Squal >0. More details of the Layer1 (physical layer) measurement procedure are provided in the above mentioned 3GPP TS 36.304.

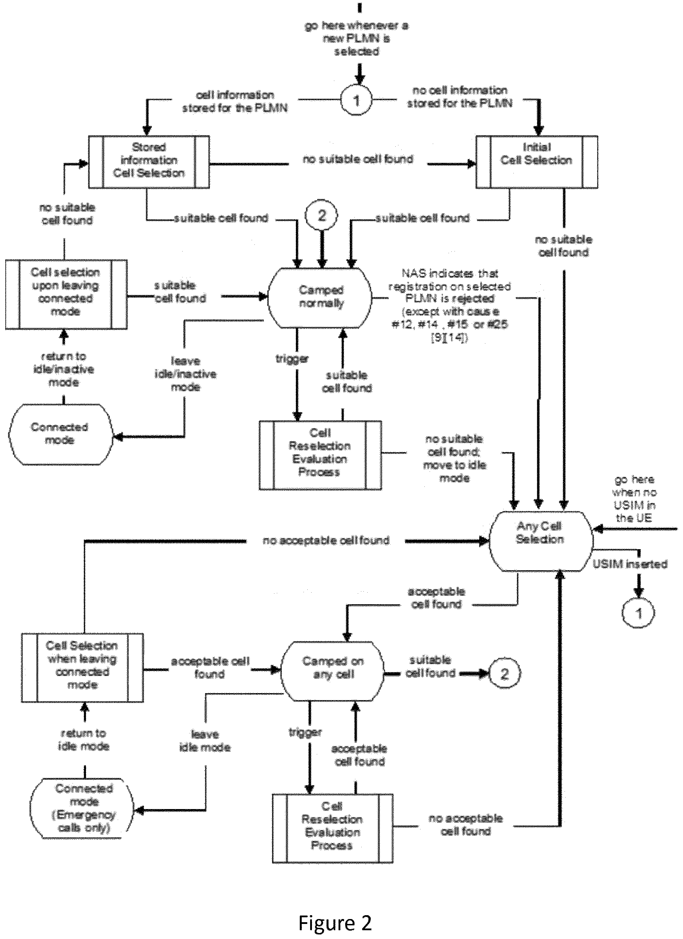

For NR, the IDLE and RRC_INACTIVE mode procedure as shown in Figure 2 (from 3GPP TS 36.304) is very similar to Figure 1 of the LTE RAT. The only refinement is the inclusion of RRC_INACTIVE mode, which is a suspended session in the connected state if there is no activity from the UE for a short time.

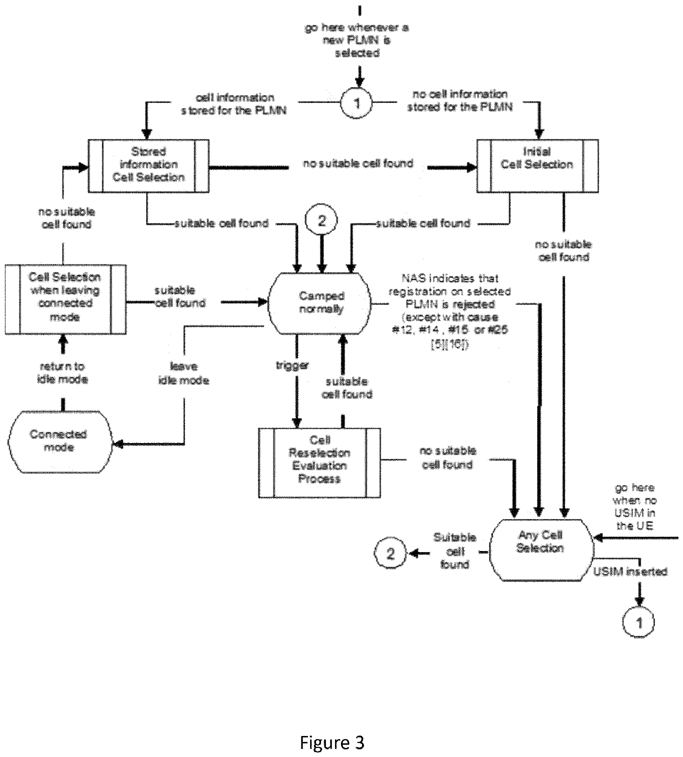

For NB-loT in LTE, Figure 3, also taken from 3GPP TS 36.304, shows the states and state transitions and procedures in RRC_IDLE. Whenever a new PLMN selection is performed, it causes an exit to number 1. Initially the UE is in idle mode. It then starts the cell selection process and camps on to a suitable cell. The UE then monitors system information and (in most cases) paging information. The cell reselection process takes place as before while the UE is camped on. If a new (better) suitable cell is found, the UE camps on to that cell. If not (or if there was no suitable cell available in the first place or a suitable cell is no longer available), the UE carries out AnyCellSelection to find an acceptable cell. If one is found the UE camps on to the cell and starts reselection. When a suitable cell is found, the UE camps on again normally. In NB-IoT, there is no provision for camping onto any (acceptable) cell (in contrast to the human-operated UE situation laid out in Figure 1). Acceptable cell functionality uses an "acceptable cell" that would not normally be selected, for emergency calls when a "suitable cell" is not available. This functionality is not required in NB-IoT.

As seen in Figure 3, cell selection usually refers to either initial cell selection or cell selection when leaving connected mode. Cell re-selection is normally used as the term to describe the process of receiving a trigger which makes the UE re-evaluate the cell it is either connected to or camped on and then use a different "suitable" cell. Here, the term "suitable" is used to imply that the measured cell attributes satisfy the cell selection criteria. Typically the cell selection criteria are where the UE Non-Access Stratum (NAS) layer:
- Identifies a selected PLMN or equivalent PLMNs
- Ensures that the cell is not barred or reserved
- Checks that the cell is not part of a tracking area which is in the list of "forbidden tracking areas for roaming" as defined in 3GPP TS 36:331: "Radio Resource Control (RRC); Protocol specification" (Release 15), hereby incorporated by reference.

Typically, cell reselection by the UE is based on received information (usually by cell broadcast in SI) and on such parameters as priority, threshold, offsets etc. If this information is not available then the "any cell" selection procedure applies.

The amount of information available to the UE will determine the exact triggers for the cell reselection procedure and/or cell selection. This information includes any information that the UE needs to be able to assess the suitability of a cell and if that cell is then of a higher priority than other cells. This priority of cells is sometimes referred to as "cell ranking" and can allow the comparison of different cells in terms of their signal strength.

It is already known that the system can provide the UE with information about neighbouring cells (on the same or different RATs) to allow the UE to determine when to make an inter-RAT cell reselection or cell selection.

It is also known that in the current procedures a time-of-stay is defined to avoid too frequent cell reselection. This is sometimes referred to as the "ping pong" problem.

As described above, it is known that different priorities even for different RATs can be configured to the UE. This is important when the system wants to page a device and needs to ensure that all devices are on the same RAT to avoid costly paging being send on multiple RATs.

A mechanism for comparing the measurements on different cells belonging to different RATs which will have different bandwidths and therefore different absolute power measurement values is also known.

It is also known that the UE would only perform an inter-RAT cell reselection or cell selection if the UE supports the new RAT and camping on the currently selected RAT is not possible.

As generally inter-RAT cell reselection or cell selection is assumed to consume power (due to the many measurements that the UE has to make) then it is important that the procedure is as efficient as possible for the sake of reducing UE power consumption and therefore increasing the battery life of the battery power UE. This is particularly the case for IoT devices such as tracking devices, whose batteries may be difficult to charge or replace.

Thus, as part of the drive for efficiency in procedures for IoT devices, signalling overhead should be reduced as far as possible. To this end, it has been proposed (see R2-1814313 ZTE "Consideration on inter-RAT cell selection/reselection in NB-IoT") to allow inter-RAT reselection based on historical information. In this procedure the UE does not perform cell measurements if the quality of the currently selected cell falls below a threshold of quality but instead selects a new best RAT cell based on previously stored historical information. The system can control the validity of the historical information stored in the UE by configuring a timer which could for example limit the amount of time that the UE can use only historical information before having to perform measurements on all available cells.

Further, recent discussions in 3GPP (see R2-1902233 Report from Break-Out Session, Session Chair (Huawei)) include the following agreements, which relate to the REL-16 WI on Inter-RAT cell selection, which has aims including power efficient NB-loT mechanism which would assist idle mode inter-RAT cell selection for NB-loT to and from LTE, LTE-MTC and GERAN (where GERAN is the GSM EDGE RAN):
- Suitability criteria of eMTC/LTE/GERAN frequencies are not provided by NB-loT network as assistance information for inter-RAT cell selection.
- Suitability criteria of NB-loT frequencies are not provided by eMTC/LTE network as assistance information for inter-RAT cell selection.

This implies that at least for the current work in 3GPP targeted to REL-16 no "assistance information" is likely to be provided to the UE.

Invention embodiments relate to the process in Figures 1 to 3 or similar processes in other RATs, specifically for the selection of cells using a different radio access technology (RAT) to the one the UE is currently either connected to or camped on. This functionality is also known as inter-RAT cell selection or re-selection.

In the current cell selection/reselection mechanism defined in 3GPP specifications, the decision criteria are based on the "Best Cell" principle, in which the UE is allowed to camp on the best cell in terms of its own signal strength measurements of the neighbouring cells. There are procedures in place to distinguish the speed of mobility of UEs to avoid frequent re-selections, hence, unnecessary usage of the UE battery.

As per the current specifications, when a UE which is capable of operating on different RATs decides that it might switch RAT, it uses the cell selection procedure and will generally scan the whole bandwidth of the other RAT looking for a suitable inter-RAT cell to camp on. This procedure is time consuming and energy consuming, both problems which should be avoided in general and in particular for a low power IoT type of device.

It is thus desirable to provide an alternative way of causing a terminal to connect to a different RAT.

### Summary of the Invention

In embodiments of the present invention, a device is controlled by the network to perform cell selection based on UE internally calculated triggers controlled by network control messages.

According to one embodiment of a first aspect of the present invention there is provided a method of operating a terminal in a multi-RAT cellular communication network, comprising:
receiving, by the terminal camped on a first cell which uses a first RAT, a control message via the first cell; and
performing by the terminal a cell selection/reselection procedure to connect to a second cell which uses a second RAT; wherein
the control message includes at least one parameter for use in deciding whether to trigger the cell selection/reselection procedure; and the method further comprises
deciding by the terminal whether to trigger the cell selection/reselection procedure, comprising the terminal executing at least one trigger condition checking algorithm by combining the at least one parameter from the control message with at least one property of the terminal not known in the network.

In the above method, preferably, the cell selection/reselection procedure results in connection to the first cell being lost after connection to the second cell. This allows power saving by the terminal when the second RAT has lower power requirements compared with the first RAT.

Preferably, the terminal receives the control message (referred to below as a trigger condition control message) as a terminal-specific message whilst in a connected state with respect to the first cell. In this case the terminal may move to an idle state with respect to the first cell prior to executing the trigger condition checking algorithm.

Alternatively, or in addition, the terminal may receive the trigger condition control message as a broadcast message whilst the terminal is in an idle state with respect to the first cell. In this case the trigger condition control message may be contained in system information broadcast by the first cell. Such system information may include a plurality of trigger condition control messages for terminals of different classes.

Preferably the terminal stores the at least one parameter from the trigger condition control message in a memory of the terminal in advance of executing the at least one trigger condition checking algorithm. This allows the at least one algorithm to be executed at a time later than receiving the trigger condition control message, for example periodically. Different trigger condition checking algorithms may be executed either singly at different times, or together.

Preferably the trigger condition control message has an associated validity time, within which the terminal can execute at least one trigger condition checking algorithm using the stored parameter(s) without any prior further communication with the network. However, the terminal, prior to executing at least one trigger condition checking algorithm, may perform measurements on at least one cell.

The above mentioned parameter from the trigger condition control message may include at least one of:
a battery level of the terminal at which to perform cell selection/reselection;
a data rate limitation in the first RAT;
a data rate capability in the first RAT;
a latency capability in the first RAT;
a data rate capability in the second RAT;
a latency capability in the second RAT;
a target number of cell selections in a given time interval;
an average cell area in the second RAT;
a timer value for moving to the second RAT; and
information about the second RAT including coverage and radio technology.

Meanwhile, the property of the terminal may include:
a current battery level of the terminal;
a data rate demanded by applications being executed by the terminal;
a latency demanded by at least one application being executed by the terminal;
a number of attempts of the cell selection/reselection procedure made by the terminal in a given time period;
history of successful and unsuccessful attempts of the cell selection/reselection procedure;
the location of the terminal;
the status of a timer in the terminal;
the elapsed time since executing a trigger condition checking algorithm;
the arrival of new data to be transmitted by the terminal;
the reception of data by the terminal;
a result of a measurement made by the terminal; and
a change in radio channel characteristics for one or more radio access technologies.

According to a second aspect of the present invention, there is provided a terminal comprising:
a transmitter and a receiver arranged for communication at least via a first cell of a first RAT; and
a controller arranged for performing a cell selection/reselection procedure to connect to a second cell of a second RAT; wherein:
   the receiver is configured to receive a control message including at least one parameter useful for deciding whether to trigger the cell selection/reselection procedure; and
   to controller is configured to decide whether to trigger the cell selection/reselection procedure by executing at least one trigger condition checking algorithm in which the at least one parameter from the control message is combined with at least one property of the terminal not known in the network.

According to a third aspect of the present invention, there is provided a base station in a wireless communications system, the wireless communication system comprising a terminal and the base station using a first Radio Access Technology, RAT, providing at least a first cell to which the terminal can connect, the base station comprising:
a transmitter and a receiver arranged for communication with the terminal; and
a controller arranged to control communications of the transmitter and receiver;
wherein the controller allows the terminal to camp on the first cell using the first RAT; and the controller transmits a control message including at least one parameter for use by the terminal in deciding whether to trigger a cell selection/reselection procedure to connect to a second cell of a second RAT.

According to a fourth aspect of the present invention, there is provided a multi-RAT cellular communication system, comprising:
a first base station providing a first cell provided using a first RAT, and a second base station providing a second cell using a second RAT; and
a terminal operable when camped on the first cell to perform a cell selection/reselection procedure to connect to the second cell; wherein
the first base station is arranged to transmit a control message including at least one parameter for deciding whether to trigger the cell selection/reselection procedure;
the terminal is arranged to decide whether to trigger the cell selection/reselection procedure by executing at least one trigger condition checking algorithm which combines the at least one parameter from the control message with at least one property of the terminal not known in the network; and
the second base station is arranged to perform the cell selection/reselection procedure with the terminal and grant the terminal a connection to the second cell.

The terminal may be a MTC device, or any other type of terminal. The first RAT may be, for example, NB-IoT in the LTE or NR standards and the second RAT may be any other RAT, such as GSM or CDMA or WiFi.

In the terminology used herein, a given set of base stations uses a first RAT, but the terminal can attach to base stations of different RATs and thus effectively change to a new system. It is further possible for the same base station to operate more than one RAT simultaneously.

In one embodiment, when execution of at least one trigger condition checking algorithm causes the terminal to perform a cell selection/reselection procedure, the terminal uses previously stored system information. The stored information enables it to then send a message initiating access to the base station using the second RAT, without any intervening steps to retrieve more information. This message may be, for example, a Random Access Channel RACH message transmitting a terminal preamble on a random access channel. The second-RAT-using base station may respond with a Random Access Response (RAR). Any subsequent camping-on procedures which may be required are known to the skilled person.

Consequently, the terminal can determine to perform cell selection/reselection without the need for "assistance information" as referred to in the introduction. The stored system information may have been provided to the terminal in any suitable way. In one embodiment, the terminal reads and stores system information of the base station using the second RAT. This may be achieved by direct reception of broadcast transmissions from the base station using the second RAT.

Alternatively, the terminal may read and store system information of the base station using the second RAT via system signalling between the selected cell and the base station using the second RAT (and then signalling such as RRC signalling between the selected base station and the terminal).

If there is no pre-stored system information/configuration, or if the information is outdated, then after the trigger condition checking algorithm prompts the terminal to perform cell selection/reselection, the terminal may read system information from the base station using the second RAT.

Further aspects of the invention include a program which when loaded onto a terminal or base station or system configures the terminal or base station or system to carry out the method steps according to any of the preceding method definitions or any combination thereof.

As can be seen from the above, embodiments of the present invention may provide new methods for the enhancement of the cell selection/reselection procedure, particularly but not exclusively the procedure for Inter RAT IDLE mode cell selection for loT devices, where the UE triggers new cell selection. The invention proposes the use of network controlled UE-centric triggers to reduce the amount of signalling (and therefore UE power) required for inter-RAT cell selection and re-selection. This invention covers the signalling of network control of the triggers as well as different possible triggers for cell selection in the UE.

Embodiments of the present invention may improve the procedure for inter-RAT cell selection made by allowing the UE (under longer term network control) to access a cell on another RAT. The amount of signalling between the UE and network is minimised to reduce device power consumption. The invention also addresses the use case where the network may wish to, for a single or group of devices, move from one RAT on to another for network load balancing gains or for network operational reasons.

The term "cell" used above is to be interpreted broadly, and may include, for example, the geographical area within the communication range of a transmission point or access point. As mentioned earlier, cells are normally provided by base stations. It is envisaged that the selected base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. Alternatively, the base stations may take an NR form and may therefore be described as a gNB. However, subject to the functional requirements of the invention, some or all base stations may take any other form suitable for transmitting and receiving signals from other stations.

The "terminal" referred to above may take the form of a user equipment (UE), subscriber station (SS), or a mobile station (MS), or any other suitable fixed-position or movable form. In an embodiment the terminal is an loT device.

An apparatus/system according to preferred embodiments of the present invention can comprise any combination of the previous method aspects. Methods according to invention embodiments can be described as computer-implemented in that they require processing and memory capability.

The apparatus according to preferred embodiments is described as configured or arranged to carry out certain functions. This configuration or arrangement may be by use of hardware or middleware or any other suitable system. In preferred embodiments, the configuration or arrangement is by software.

Thus, to summarise, embodiments of the present invention may provide a procedure for inter-RAT cell selection (including reselection) by allowing a terminal such as an IoT device, under longer term network control, to access a cell on another RAT. A multi-RAT cellular communication system comprises a first base station providing a first cell using a first RAT, and a second base station providing a second cell using a second RAT. A terminal camped on the first cell may perform a cell selection/reselection procedure to connect to the second cell. This is achieved by the first base station transmitting a trigger condition control message including at least one parameter for deciding whether to trigger the cell selection/reselection procedure. Each such parameter is stored in an internal memory of the terminal. At some later time the terminal decides whether to trigger the cell selection/reselection procedure by executing trigger condition checking algorithms, which combine the at least one parameter from the trigger condition control message with at least one property of the terminal not known in the network, such as the current battery level of the terminal. The second base station completes the cell selection/reselection procedure with the terminal and grants a connection to the second cell. This reduces the amount of signalling (and therefore terminal power) required for inter-RAT cell selection and re-selection.

In general the hardware mentioned may comprise the elements listed as being configured or arranged to provide the functions defined. For example this hardware may include a receiver, a transmitter (or a combined transceiver), a processor, memory/storage medium, a user interface and other hardware components generally found in a terminal.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites on the vehicle or in the back-end system and interconnected by a communication system.

Method steps of the invention can be performed by one or more programmable processors executing a computer program to perform functions of the invention by operating on input data and generating output data.

The invention is described in terms of particular embodiments. Other embodiments are within the scope of the following claims. For example, the steps of the invention can be performed in a different order and still achieve desirable results.

### Brief Description of the Drawings

Reference is made, by way of example only, to the accompanying drawings in which:
Figure 1 is a flow diagram illustrating cell selection/reselection in idle mode according to LTE standards;
Figure 2 is a flow diagram illustrating RRC_IDLE and RRC_INACTIVE Cell Selection and Reselection for NR;
Figure 3 is a flow diagram illustrating RRC_IDLE Cell Selection and Reselection for NB-IoT;
Figure 4 is an overview diagram of two different-RAT systems, showing one cell of each system and a UE which can access either system;
Figure 5 is a flow diagram of a principle of operation from the viewpoint of a terminal;
Figure 6 is a flow diagram of a first signalling procedure in a terminal, according to an embodiment;
Figure 7 is a flow diagram of a second signalling procedure in a terminal according to an embodiment;
Figure 8 is a flow diagram of a third signalling procedure in a terminal according to an embodiment;
Figure 9 is a hardware diagram showing the structure of a terminal or base station which may be employed in an embodiment of the present invention.

### Detailed Description

In the detailed description which follows, references to a "RAT" are to be interpreted as "PMLN using the RAT" where the context demands. As noted in the introduction, a UE does not connect to a RAT as such but rather, to a PLMN implemented using a particular RAT. For ease of explanation, it is assumed below that a base station is part of one PLMN and employs one RAT. References below to "UE" include any kind of terminal or wireless device.

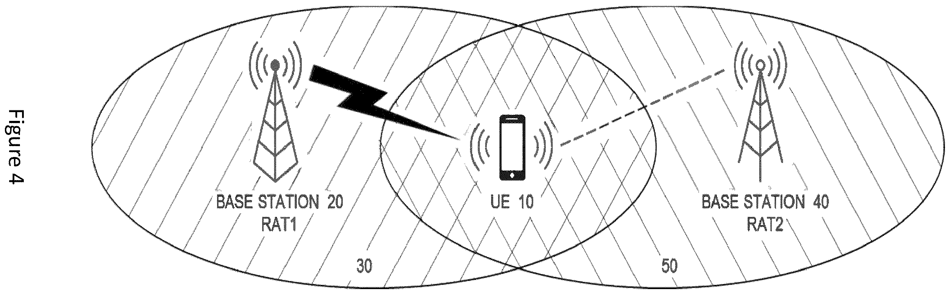

Figure 4 shows a UE 10 (such as an NB-IoT/MTC device) which can access cells provided by base stations of two different RATs. Base station 20 provides cell 30 of RAT1 and base station 40 provides cell 50 of RAT2. UE 10 is camped on to or connected to base station 20 of the first RAT and a dotted line shows a future connection to base station 40 of RAT2. UE 10 transfers from base station 20 to base station 40 using inter-RAT cell selection (including re-selection).

As part of the specification of the procedure for inter-RAT cell selection, one of the most important criteria is that UE power consumption is not negatively affected. Especially for NB-loT devices the main use case for these devices is expected to be UEs or connected devices that are battery powered so any unnecessary increase in device power consumption would negatively impact battery life for the device. Generally for these types of devices, the required bit rate is low and latency requirements are relaxed as well. Handover is not required between the different RATs, the main purpose of using inter-RAT is so the device can still connect when there is no suitable NB-IoT cell available. This can happen because the device moves out of NB-IoT coverage or the coverage pattern around the device changes, for example, due to environmental changes such as new buildings or changes in network deployments.

Although the current inter RAT measurement procedure includes some RACH circumvention mechanisms which may give complete freedom to the UE, embodiments of the present invention introduce network controlled UE constraints to give the advantages of a more UE based inter-RAT cell selection mechanism but without the disadvantages of the network being unsure of the UE behaviour. In addition the invention introduces network signalled constraints that reduce power consumption of the device by reducing certain power consuming signalling steps.

Accordingly, the benefit of invention is power saving (providing a mechanism for autonomous transmission) whilst retaining network control over the autonomous transmissions for inter-RAT cell selection. This has the benefit of reducing UE power consumption by removing unnecessary UE transmissions.

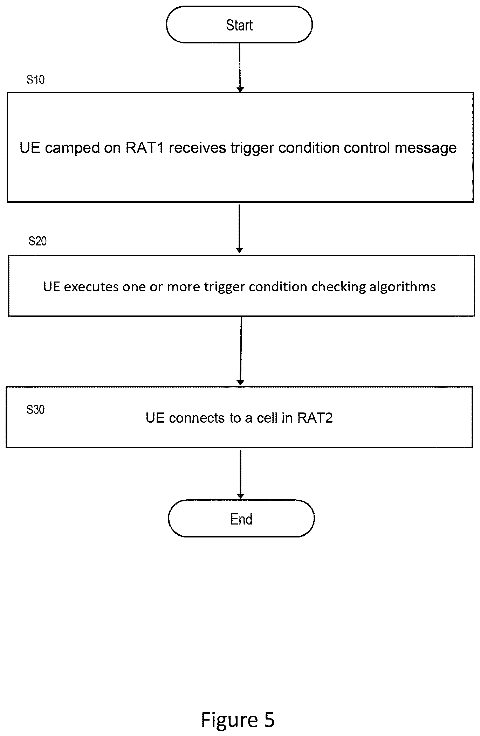

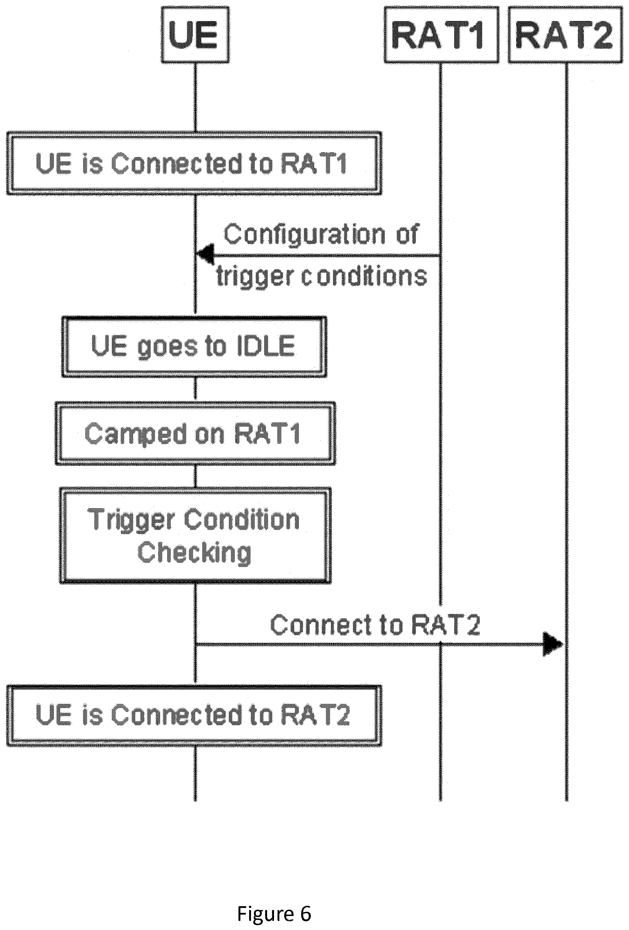

A principle of operation, given the arrangement described above with respect to Figure 4, is shown in Figure 5. In step S10, the UE 10 begins in the state of being camped on cell 30 provided by base station 20 in a network (first PLMN) using the first radio access technology RAT1. Via this cell, the UE receives a trigger condition control message which may either be in the form of UE-specific signalling, or broadcast SI as described later. The trigger condition control message includes information such as parameter values employed in one or more trigger condition checking algorithms. In step S20, at least one trigger condition checking algorithm is executed within the UE 10, with the result that the UE 10 determines to perform an inter-RAT cell selection/reselection procedure. At step S30, by performing the cell selection/reselection procedure UE 10 becomes connected to cell 50 provided by base station 40 in a second PLMN using radio access technology RAT2. This connection may be instead of, or less typically in addition to, the existing connection to RAT1. For power saving purposes the UE may relinquish cell 30 as a serving cell, even if it remains in idle mode with respect to that cell. Some more concrete signalling procedures will now be described with respect to Figures 6 to 8.

Figure 6 shows the case where a device is connected to RAT1 and receives a message from RAT1 with the detailed parameters needed to control the triggering of the UE to re-select to RAT2. In this case, the UE begins the procedure in a connected state. This means that the UE is capable of receiving and transmitting radio resource control (RRC) messages from the network. In this state the network has the ability to send specific RRC messages to control the behaviour of the UE. In this embodiment of the invention, specific control messages, which may be deemed trigger condition control messages, are sent to the UE to control the "trigger conditions". It is these internal UE triggers that actually control the process of the UE initiating the procedures required for inter-RAT cell selection.

Once the trigger conditions have been received and typically also acknowledged by the UE, then the UE can move to a low power consuming state such as RRC_IDLE which means RRC disconnected, or RRC_INACTIVE which is a mode of operation in which the UE is not expected to receive information for longer periods of time. It is the state of RRC_IDLE which is depicted in Figure 6.

In this state the UE is said to be camping on a cell (in this case the last cell it made a radio connection to). Camping on a cell means that the device will typically wake up at a given regularly repeating time slots (commonly referred to as DRX) to listen to the base station to look for system information changes or a paging signal (which indicates that the device should move to RRC_connected mode). Using the trigger condition control messages previously downloaded and stored in an internal memory, the UE then can execute one or more trigger condition checking algorithms internally in the UE. It is these that trigger the UE to make a connection to a different RAT. More than one such algorithm may act together, the combination of algorithms operating by the combination of different triggering conditions (see below). The trigger condition checking algorithms are, for example, executed periodically in the UE, and/or following receipt of a trigger condition control message. Therefore, not every execution of trigger condition checking algorithms results in triggering the cell selection/reselection procedure.

In Figure 6 a connection to a cell in RAT2 is shown, as in this example a specific trigger condition has been met with respect to a specific cell in RAT2.

Having triggered the cell selection/reselection procedure by a trigger condition checking algorithm, the cell may be selected in accordance with the cell selection/reselection procedure outlined earlier. Fig. 6 shows a simplified form of the process in which it is assumed that stored measurements are available, which inform the UE that connection to RAT2 is possible.

For example, RAT1 may be NB-loT and RAT2 may be GSM. In this case the connection to RAT2 may be made by the UE transmitting a RACH msg 1 to the GSM network, to which the GSM network responds with a RAR (Random Access Response). After receiving the RAR, the UE is able to camp on the GSM cell. It is assumed in this example that the UE already has enough stored information to perform a RACH to the GSM cell without having to obtain synchronisation first from that cell or perform signal strength measurements or obtain SI from that cell. If the UE has already enough information and it is still valid then this can potentially save many processing steps and transmitted radio messages, which helps to reduce UE device power consumption, and in this case also speeds up the connection time to RAT2 (GSM in this case). A further possibility is for the UE to attempt inter-RAT RACH with RAT2 on the basis of stored information after a number of unsuccessful RACH attempts in RAT1.

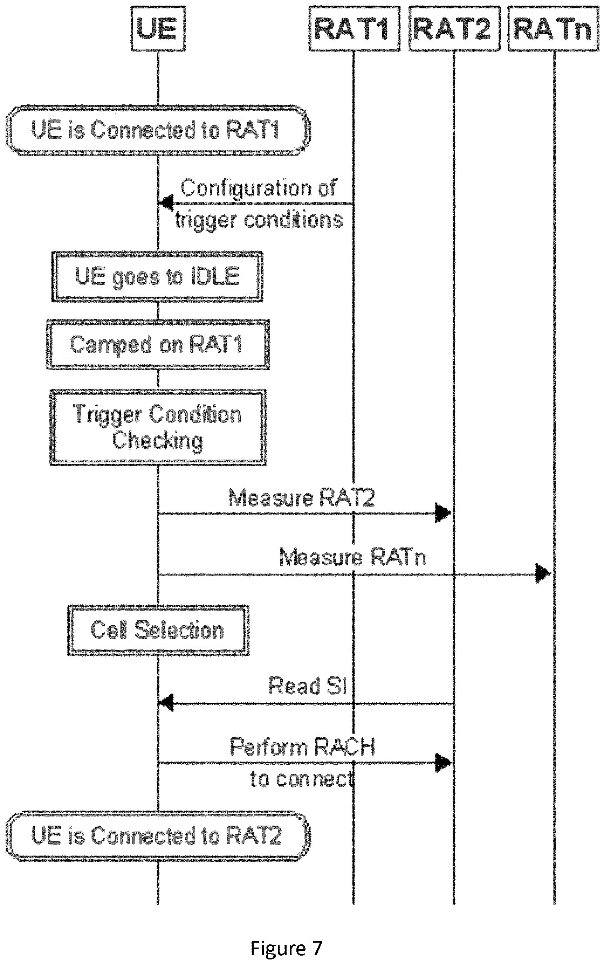

In Fig. 6, it was assumed that the UE has stored information such as results of measurements performed at some time in the past, which are still valid and allow the UE to access RAT2 without making new measurements. More generally this will not be the case and fresh measurements will be required. Figure 7 shows the case where triggering conditions initiate the UE to make the necessary inter-RAT cell signal strength measurements, as indicated by the step "Measure RAT2". In practice this means that the UE should measure all cells in RAT2 of higher priority than the serving cell. These measurements can then enable the usual procedures for the UE to connect to RAT2, including RACH access. RACH access can be made either through reading system information broadcast by RAT2 or by using such information which was supplied via another RAT, either by being broadcast or by UE-specific signalling.

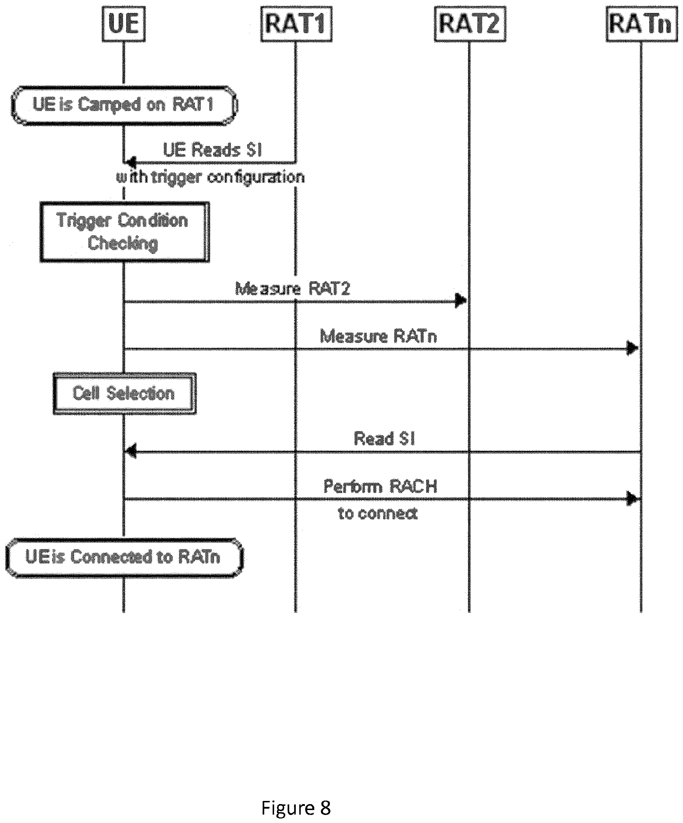

Figure 8 illustrates the signalling procedure in a case where the device starts the procedure in RRC_IDLE mode and therefore needs to obtain the trigger condition checking parameters. To do this, the UE reads the trigger condition configuration parameters from the SI of the RAT on which the UE is camped. Although the UE will conventionally read SI in order to obtain a mobile terminal configuration and so forth, the novel feature here is the reading of additional trigger condition checking, which are not conventionally included in SI. Although SI generally broadcasts information to be used in common by all connected devices, some differentiation is possible to cater for the requirements of differing device types. For example, specific named SIBs (SI blocks) may be reserved for loT devices, which other devices may either read or ignore. It should further be noted that SI broadcast by RAT1 may provide information not only on RAT1 but possibly also information on other RATs, which RAT1 may acquire through the Core Network. As in the previous example, the device may then perform measurements prior to a possible inter-RAT cell selection. It is also possible that some of the measurements may not be necessary depending on the availability and validity of UE stored information.

### Trigger Conditions

In all the examples given above the UE runs one or more of its own trigger condition checking algorithms internally in the UE. The algorithms are the UE's own algorithms in the sense that they are particular to that UE, employing UE-specific information not necessarily known by the network (see below). The trigger condition checking algorithms are controlled and managed by trigger condition control messages transmitted from RAT1 to the UE, which inform the UE of factors to take account of when running the trigger condition checking algorithms. These factors include the trigger condition checking parameters mentioned above and more particularly specific values for such parameters. Using the previously downloaded and stored trigger condition control messages, the UE then can determine specific actions relating to changing the RAT that the device is using, namely reading system information from a cell and/or performing measurements.

Thus, the trigger condition checking algorithms have the primary purpose of determining whether or not the UE should perform cell selection or reselection. However, the trigger condition checking algorithms may also extend to the actual cell selection/reselection process itself, employing parameters such as Srxlev and Squal mentioned in the introduction, possibly with modified values from those used conventionally.

Preferably, the trigger condition checking algorithms are at least partly based on other UE centric criteria. That is, in addition to the content of trigger condition control messages, including parameters and/or parameter values as described below, the UE also uses information that only it has, and is not available or readily available in the network. For example the UE has a better view of the application layer than the network, so generally is in a better position to know about data rate demands in real time (e.g. camera sensors uploading occasional images). As another example, the UE has a better knowledge than the network of its precise location. A usually stationary IoT device like a smart meter may be moved to a new location, which can be an internal trigger to perform cell a re-selection.

In principle, it would be possible for the UE to report all of the information to the network and therefore the algorithms would then be able to reside in the network, but this would consume UE power as the information would need to be sent from the UE to the network using radio signalling. A key difference to typical modes of operation, and an advantage of embodiments, is that the trigger condition checking algorithms occur in the UE rather than in the network. This reduces the amount of network signalling required to control the process of inter-RAT cell selection. Meanwhile the trigger condition control messages provide a mechanism by which the network can exert some influence and predictability upon the UE behaviour.

A non-exhaustive list of possible triggers and trigger condition control messages is provided in this section.
- UE battery life remaining. This trigger condition control message informs the UE at what battery remaining level (threshold value) the UE should trigger cell selection. This may trigger inter-RAT cell selection which will lead to the device being on a RATx where the UE consumes less radio power (at the expense of data rate, latency etc.). For example a GSM connection will be expected to consume less power than an NB-IoT connection but to have a lower data rate and increased latency. Connections through the core network or at application level can allow one RAT knowledge of available data rates and latency in other RATs. IoT devices may follow the control message directly; other device types (such as smart phones) may allow the user, or applications being run by the user, to influence the % battery level used as the trigger. Trigger condition control messages:
   ∘ Percentage battery remaining
   ∘ RATx maximum data rate and latency capabilities
- Change in reporting rate (either increase or decrease in average data rate being generated by the UE). For example if the UE was generating more data than a threshold value set by the control message then this may trigger an inter-RAT cell selection. Values for these criteria may also be preset in the UE with the trigger condition control messages modifying or overriding the preset values. Trigger condition control messages:
   ∘ Date rate limitation (can either be maximum or minimum) for current RAT
   ∘ RATx maximum data rate and latency capabilities
- Amount of cell selection events. Generally the UE would like to minimise unnecessary selections to reduce UE power consumption. Trigger condition control messages:
   ∘ Target number of cell selections in a given time interval (e.g. 10 per day) for Current RAT
   ∘ Indication of the average cell area size for RATx
- Cell re-selection based on network centric criteria such as load balancing which may be triggered by UE. As mentioned earlier, cell re-selection is the process when a new cell is selected where an existing cell is already known.
- Network considerations such as the availability of scarce resources (including radio bandwidth and backhaul capacity) may require networks to move devices from one RAT to another, this may mean that signalling is used to force devices to perform cell selection. Trigger condition control messages:
   ∘ Timer for moving to another RATx. Typically different values can be provided to different UEs so that network load from many devices moving to RATx at the same time is minimised.
- Changing priorities of cell-reselection criteria based on learning from past history of successful or unsuccessful re-selections. The UE may have internal algorithms that it uses to minimise cell selection to optimise its own power consumption. Although past history has already been proposed for use in inter-RAT reselection as already noted, its use in conjunction with other criteria proposed here is novel; further, the amount of past history to be used can be controlled. Trigger condition control messages:
   ∘ RATx information such as coverage, data rate, RAT type (radio technology), etc.
   ∘ Indication of the amount of past history to be taken into account

The trigger condition control messages are typically stored on the device for use in the trigger condition checking algorithms, and as such may also either implicitly or explicitly have an associated validity time. For example, specific information about RATx may only be applicable for 1 day. Upon expiry of the validity of the trigger condition control messages the UE may update the trigger condition control messages at a time best suited to the UE, e.g. when it next connects to the network, by sending a specific request for a trigger condition control message. Alternatively in the embodiment in Fig. 8, the update occurs when the UE receives SI.

As already mentioned, the trigger condition checking algorithm combines parameters from a trigger condition control message with information known to the terminal and which may not be known by the network. Examples of such information include:
∘ a current battery level of the terminal
∘ a data rate demanded by applications being executed by the terminal
∘ a latency demanded by at least one application being executed by the terminal
∘ a number of attempts of the cell selection/reselection procedure made by the terminal in a given time period
∘ history of successful and unsuccessful attempts of the cell selection/reselection procedure
∘ the location of the terminal
∘ the status of a timer in the terminal
∘ the elapsed time since executing a trigger condition checking algorithm ∘ the arrival of new data to be transmitted by the terminal
∘ the reception of data by the terminal
∘ a result of a measurement made by the terminal
∘ a change in radio channel characteristics for one or more RATs

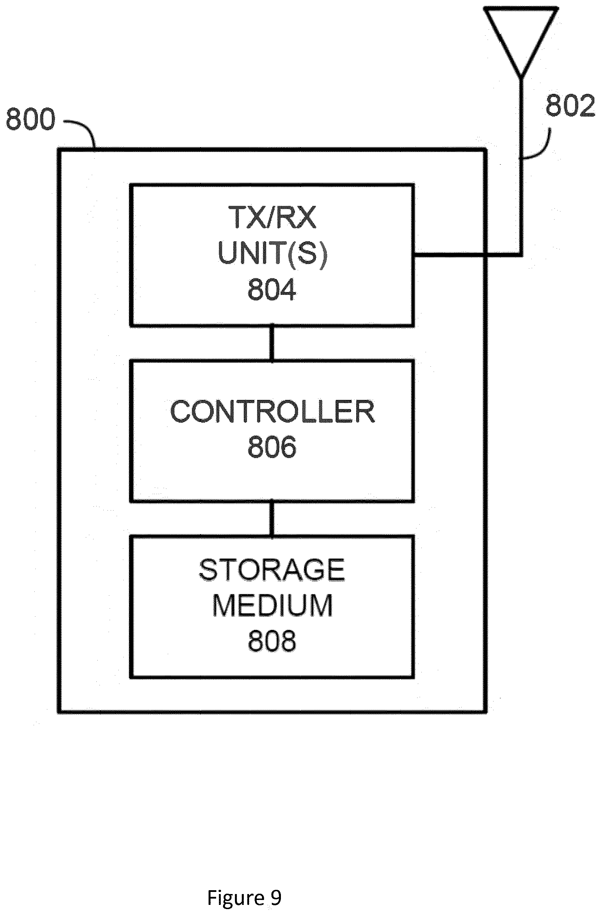

Figure 9 shows the hardware structure of a terminal 10 or base station 20 suitable for use with invention embodiments, including an antenna 802, transmission and reception unit(s) 804, a controller 806 and a storage medium or memory 808.

The elements specific to the terminal invention embodiments are the controller 806 and the receiver/transmitter 804. The receiver is shown here as transmitter/receiver unit 804 and can access more than one RAT. The controller 806 carries out cell selection and camps onto a base station of a different RAT after being triggered by the base station on which it is camped.

The terminal may include any type of device which may be used in a wireless communication system described above and may include IoT devices, cellular (or cell) phones (including smartphones), personal digital assistants (PDAs) with mobile communication capabilities, laptops or computer systems with mobile communication components, and/or any device that is operable to communicate wirelessly. The terminal includes at least one transmitter/receiver unit 804 (each providing a receiver as mentioned above) connected to at least one antenna 802 and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including interpreting a trigger condition control message, executing trigger condition checking algorithms, and consequent cell selection and re-selection. For example, the various functions described above may be embodied in the form of a computer program stored in the storage medium 808 and executed by the controller 806. The transmission/reception unit 804 is arranged, under control of the controller 806, to receive signals from cells of (at least) two different RATs. The storage medium 808 stores the values (such as SI values) required for cell selection and camping on.

The elements specific to the base station invention embodiments are the controller 806 and the transmitter/receiver 804. The receiver is shown here as transmitter/receiver unit 804 and can access more than one RAT. The controller 806 triggers the terminal to camp onto a base station of a different RAT.

The base station belongs to at least one RAT and may, for example, be described as an eNB (eNodeB) (which term also embraces Home eNB or HeNB) or take an NR form and be described as a gNB. Other/different base stations may take any other form of a different RAT as long as they are suitable for transmitting and receiving signals from other stations.

In any embodiment, the controller 806 may be, for example, a microprocessor, digital signal processor (DSP), application-specific integrated circuit (ASIC), field-programmable gate array (FPGA), or other logic circuitry programmed or otherwise configured to perform the various functions described above, including constructing trigger condition control messages and/or SI blocks including trigger condition checking parameters. For example, the various functions described above may be embodied in the form of a computer program stored in the storage medium 808 and executed by the controller 806.

### Summary

Invention embodiments can provide new methods for the enhancement of the Inter RAT IDLE mode cell selection procedures for IoT devices where the UE triggers new cell selection. Embodiments of the present invention enable the use of network controlled UE centric triggers to reduce the amount of signalling (and therefore UE power) required for inter-RAT cell selection and re-selection. The signalling of network control of the triggers is addressed, as well as different possible triggers for cell selection in the UE. Embodiments of this invention may provide improvements to the procedure for inter-RAT cell selection made by allowing the UE (under longer term network control) to access a cell on another RAT. The amount of signalling between the UE and network is minimised to reduce device power consumption. The invention also addresses the use case where the network may wish to, for a single or group of devices, move from one RAT on to another for network load balancing gains or for network operational reasons.

Various modifications are possible within the scope of the present invention.

For convenience, the invention has been described with respect to specific cells. However, the invention can be applied without the necessity for cells, and may be described in terms of the communications between different stations (including base stations supporting cells, mobile stations (e.g. D2D), and other types of station such as relays, and to communication via Remote Radio Heads of base stations.

For convenience, the invention has been disclosed assuming one RAT per base station and system. However the invention can be applied if one system supports multiple RATs. Further, the cells 30 and 50 in Figure 4 may be provided by one and the same base station.

References in the claims to a "terminal" are intended to cover any kind of user device, subscriber station, mobile terminal, IoT device and the like and are not restricted to the UE of 3GPP systems.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be understood that various changes and/or modifications may be made to the particular embodiments just described without departing from the scope of the claims.

## Claims

1. A method of operating a terminal in a multi-Radio Access Technology, RAT, cellular communication network, comprising:
receiving, by the terminal camped on a first cell which uses a first RAT, a control message via the first cell; and
performing by the terminal a cell selection/reselection procedure to connect to a second cell which uses a second RAT; wherein
the control message includes at least one parameter for use in deciding whether to trigger the cell selection/reselection procedure; and the method further comprises
deciding by the terminal whether to trigger the cell selection/reselection procedure, comprising the terminal executing at least one trigger condition checking algorithm by combining the at least one parameter from the control message with at least one property of the terminal not known in the network.

2. The method according to claim 1 wherein the cell selection/reselection procedure results in connection to the first cell being lost after connection to the second cell.

3. The method according to claim 1 or 2 wherein the terminal receives the control message as a terminal-specific message whilst in a connected state with respect to the first cell.

4. The method according to claim 3 further comprising the terminal moving to an idle state with respect to the first cell prior to executing the trigger condition checking algorithm.

5. The method according to any of claims 1-3 wherein the terminal receives the control message as a broadcast message whilst in an idle state with respect to the first cell.

6. The method according to claim 5 wherein the control message is contained in system information broadcast by the first cell.

7. The method according to claim 6 wherein the system information includes a plurality of control messages for terminals of different classes.

8. The method according to any preceding claim wherein the terminal stores the at least one parameter from the control message in a memory of the terminal in advance of executing the at least one trigger condition checking algorithm.

9. The method according to claim 8 wherein the control message has an associated validity time, within which the terminal can execute at least one trigger condition checking algorithm using the stored parameter(s) without any prior further communication with the network.

10. The method according to claim 8 or 9 wherein the terminal, prior to executing at least one trigger condition checking algorithm, performs measurements on at least one cell.

11. The method according to any preceding claim wherein the at least one parameter from the control message includes at least one of:
a battery level of the terminal at which to perform cell selection/reselection;
a data rate limitation in the first RAT;
a data rate capability in the first RAT;
a latency capability in the first RAT;
a data rate capability in the second RAT;
a latency capability in the second RAT;
a target number of cell selections in a given time interval;
an average cell area in the second RAT;
a timer value for moving to the second RAT; and
information about the second RAT including coverage and radio technology.

12. The method according to any preceding claim wherein the at least one property of the terminal includes:
a current battery level of the terminal;
a data rate demanded by applications being executed by the terminal;
a latency demanded by at least one application being executed by the terminal;
a number of attempts of the cell selection/reselection procedure made by the terminal in a given time period;
history of successful and unsuccessful attempts of the cell selection/reselection procedure;
the location of the terminal;
the status of a timer in the terminal;
the elapsed time since executing a trigger condition checking algorithm;
the arrival of new data to be transmitted by the terminal;
the reception of data by the terminal;
a result of a measurement made by the terminal; and
a change in radio channel characteristics for one or more radio access technologies.

13. A terminal comprising:
a transmitter and a receiver arranged for communication at least via a first cell of a first RAT; and
a controller arranged for performing a cell selection/reselection procedure to connect to a second cell of a second RAT; wherein:
the receiver is configured to receive a control message including at least one parameter useful for deciding whether to trigger the cell selection/reselection procedure; and
to controller is configured to decide whether to trigger the cell selection/reselection procedure by executing at least one trigger condition checking algorithm in which the at least one parameter from the control message is combined with at least one property of the terminal not known in the network.

14. A base station in a wireless communications system, the wireless communication system comprising a terminal and the base station using a first Radio Access Technology, RAT, providing at least a first cell to which the terminal can connect, the base station comprising:
a transmitter and a receiver arranged for communication with the terminal; and
a controller arranged to control communications of the transmitter and receiver;
wherein the controller allows the terminal to camp on the first cell using the first RAT; and the controller transmits a control message including at least one parameter for use by the terminal in deciding whether to trigger a cell selection/reselection procedure to connect to a second cell of a second RAT.

15. A multi-RAT cellular communication system, comprising:
a first base station providing a first cell provided using a first RAT, and a second base station providing a second cell using a second RAT; and
a terminal operable when camped on the first cell to perform a cell selection/reselection procedure to connect to the second cell; wherein
the first base station is arranged to transmit a control message including at least one parameter for deciding whether to trigger the cell selection/reselection procedure;
the terminal is arranged to decide whether to trigger the cell selection/reselection procedure by executing at least one trigger condition checking algorithm which combines the at least one parameter from the control message with at least one property of the terminal not known in the network; and
the second base station is arranged to perform the cell selection/reselection procedure with the terminal and grant the terminal a connection to the second cell.
